# EUROPEAN PATENT SPECIFICATION

(11) **EP 3 044 276 B1**
(45) Date of publication and mention of the grant of the patent: **08.10.2025**
(21) Application number: 14844261.9
(22) Date of filing: 21.08.2014
(51) Int. Cl.: C08G 77/62, C08G 77/50, C09J 5/00

(54) **PRECERAMIC ADHESIVE COMPOSITION**
PRÄKERAMISCHE HAFTZUSAMMENSETZUNG
COMPOSITION ADHÉSIVE PRÉCÉRAMIQUE

(30) Priority: 12.09.2013 US 201361876854 P
(43) Date of publication of application: 20.07.2016
(73) Proprietor: RTX Corporation, Farmington, CT 06032 (US)
(72) Inventor: SHEEDY, Paul, Bolton, Connecticut 06043 (US); SCHMIDT, Wayde R., Pomfret Center, Connecticut 06259 (US); PREVOST, Erica L., Bloomfield, CT 06002 (US); SEMBER, Alex J., Waterbury, Connecticut 06708 (US)
(74) Representative: Dehns
(86) International application number: PCT/US2014/051973
(87) International publication number: WO 2015/038304

(56) References cited:
- EP-A1- 0 317 129
- WO-A1-91/16277
- RU-C1- 2 034 892
- US-A1- 2006 263 577
- US-A1- 2007 092 762
- US-A1- 2009 264 273
- US-A1- 2013 096 217
- PAOLO COLOMBO ET AL: "Polymer-Derived Ceramics: 40 Years of Research and Innovation in Advanced Ceramics", JOURNAL OF THE AMERICAN CERAMIC SOCIETY, vol. 93, no. 7, 1 June 2010 (2010-06-01), pages 1805 - 1837, XP055086751, ISSN: 0002-7820, DOI: 10.1111/j.1551-2916.2010.03876.x
- DATABASE WPI Week 199602, Derwent World Patents Index; AN 1996-018912
- COLOMBO, PAOLO ET AL.: "Polymer-derived ceramics: 40 years of research and innovation in advanced ceramics.", JOURNAL OF THE AMERICAN CERAMIC SOCIETY, vol. 93, no. 7, 1 June 2010 (2010-06-01), pages 1805 - 1837, XP055086751, DOI: 10.1111/J.1551-2916.2010.03876.X

## Description

### CROSS-REFERENCE TO RELATED APPLICATION

### BACKGROUND

This disclosure relates to a method for preparing a ceramic preform using a preceramic tackifier.

Composite materials can be formed by arranging multiple fiber arrays relative to one another in a lay-up process and infiltrating the fiber arrays with a matrix material. During the lay-up and infiltration process, the fiber arrays may be held together by a fugitive adhesive. The adhesive burns off either prior to or during molding. EP 0 317 129 relates to a method for making fiber-reinforces ceramic matrix composites. WO 91/16277 A1 relates to a method for preparing a fiber-reinforced ceramic honeycomb.

### SUMMARY

The method includes infiltrating the first fiber array and the second fiber array with a matrix material to form the component, and converting the preceramic-polymer-based adhesive into an integral ceramic phase of the component by pyrolysis.

In a further embodiment of any of the foregoing embodiments, the preceramic-polymer-based adhesive includes a resin phase and a filler phase.

In a further embodiment of any of the foregoing embodiments, the filler participates in a reaction with at least one of the resin phase and the matrix material during the converting step.

In a further embodiment of any of the foregoing embodiments, the filler includes a metal.

In a further example of any of the foregoing embodiments, the preceramic-polymer-based adhesive includes 60% or less of the filler phase by weight.

In a further example of any of the foregoing embodiments In a further example of any of the foregoing embodiments, the filler phase includes at least one of a carbide, a nitride, an oxycarbide, an oxynitride, and an oxide.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 is a flow chart of a method of preparing a ceramic preform.
Figure 2 schematically illustrates a cross-sectional view of a ceramic component made from the ceramic preform.

### DETAILED DESCRIPTION

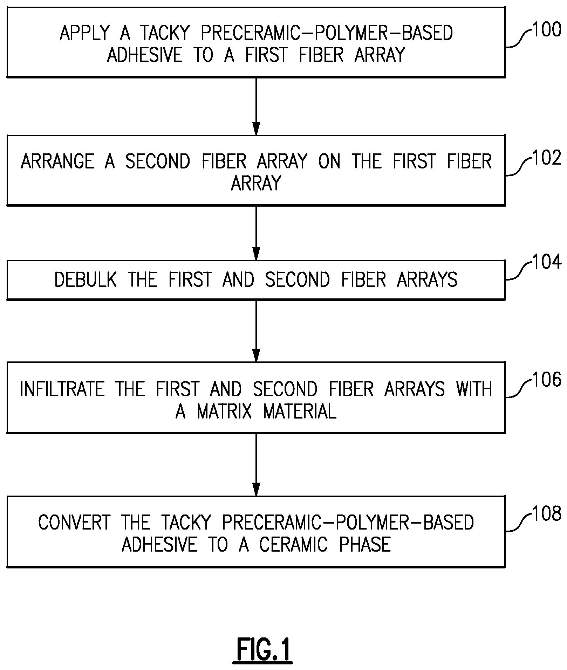

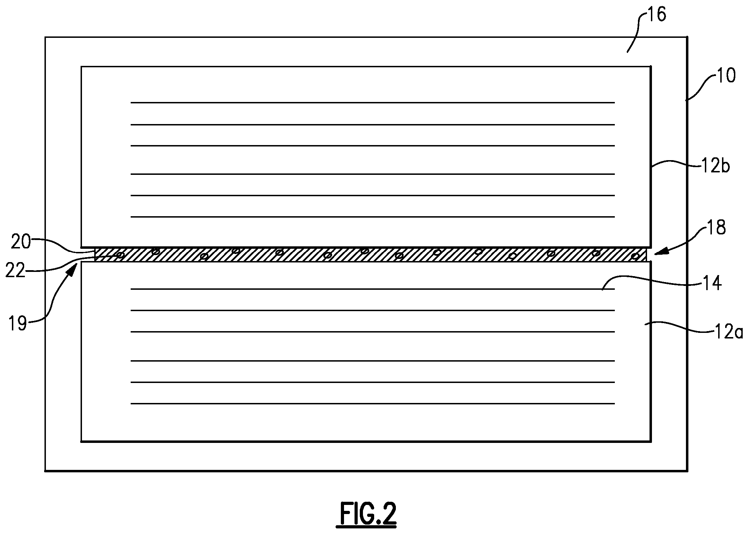

Figure 1 shows a method of preparing a ceramic preform. Figure 2 illustrates a cross-sectional view of a ceramic component 10 made from the ceramic preform formed by the method of Figure 1. As will be discussed in more detail below, the disclosed method utilizes a tacky preceramic-polymer-based adhesive during a fiber arrangement process which becomes an integral part of the final ceramic component made from the preform.

In step 100, a tacky preceramic-polymer-based adhesive is applied to a first fiber array 12a. In one example, the tacky preceramic-polymer-based adhesive is deposited onto the first fiber array 12a in a layer less than 10 mils (254 µm) thick. More particularly, the layer of tacky preceramic-polymer-based adhesive can be between 1.5 mils and 3 mils (38.1 µm to 76.2 µm) thick. In step 102, a second fiber array 12b is arranged on the first fiber array 12a such that the adhesive holds the first and second fiber arrays 12a, 12b together. In another example, the tacky preceramic-polymer-based adhesive can also be applied to the second fiber array 12b prior to the arranging step 102.

Each of the first and second fiber arrays 12a, 12b includes a plurality of fibers 14. The first and second fiber arrays 12a, 12b can be bundles of fibers 14, called "tows." In another example the first and second fiber arrays 12a, 12b can include multiple fibers 14 arranged parallel to one another, randomly within the first and second arrays 12a, 12b, or in another arrangement. The fibers 14 can be, in one example, ceramic-based.

The tacky preceramic-polymer-based adhesive can be applied to the first and/or second fiber arrays 12a, 12b by, for instance, painting, spreading, dipping, or spraying. In an alternate example, the tacky preceramic-polymer-based adhesive can be applied to the first and/or second fiber arrays 12a, 12b as a tape, laminate, or paste. The tacky preceramic-polymer-based adhesive can have adhesive properties which are temperature dependent. For example, the tacky preceramic-polymer-based adhesive can be applied to the first and/or second fiber arrays 12a, 12b at a first temperature, and may then be heated to a second, higher temperature which can cause the tackiness of the tacky preceramic-polymer-based adhesive to increase. In an alternate example, the tacky preceramic-polymer-based adhesive can be heated to a first temperature prior to application to the first and/or second fiber arrays 12a, 12b to decrease the viscosity and simplify the application, and then may be cooled to a second lower temperature to solidify the tacky preceramic-polymer-based adhesive. In a further example, the tacky preceramic-polymer-based adhesive can be applied to the first and/or second fiber arrays 12a, 12b at a first, high temperature, then the first and/or second fiber arrays 12a, 12b and the tacky preceramic-polymer-based adhesive can be cooled to a second, low temperature.

The tacky preceramic-polymer-based adhesive can be applied to the first fiber array 12a such that it only covers at least a portion of the surface of the first fiber array 12a. In one example, the tacky preceramic-polymer-based adhesive covers the entire surface of the first fiber array 12a, but in another example, the tacky preceramic-polymer-based adhesive layer may be discontinuous. Alternatively, the tacky preceramic-polymer-based adhesive can partially or fully infiltrate into the fiber array 12a. Likewise, the tacky preceramic-polymer-based adhesive can be only covering the surface of the second fiber array 12b or may infiltrate into the second fiber array 12b. Said another way, the tacky

In step 104, the first and second fiber arrays 12a, 12b are debulked. The debulking step removes air from within the first and second fiber arrays 12a, 12b and from in between the first and second fiber arrays 12a, 12b, for example, by compression. The debulking step 104 can be performed periodically during the arrangement step 102. In one example, additional fiber arrays may be added to the composite component by repeating steps 100 through 104.

In step 106, the first and second fiber arrays 12a, 12b are infiltrated with a matrix material 16. The matrix material 16 can be a resin. In one example, the matrix material 16 is convertible to a ceramic material, for example, by pyrolysis or thermal conversion. In step 108, the tacky preceramic-polymer-based adhesive is converted to a ceramic phase 18 by pyrolysis. The ceramic phase 18 is an integral part of the matrix material 16 and is located at an interface 19 of the first and second fiber arrays 12a, 12b. In one example, the ceramic phase 18 may be indistinguishable from the matrix material 16. After the converting step 108, the ceramic phase 18 can still be less than 10 mils (254 µm) thick, or more particularly, between 1.5 mils and 3 mils (38.1 µm to 76.2 µm) thick.

In one example, the tacky preceramic-polymer-based adhesive and the resulting ceramic phase 18 can include a resin phase 20 and a filler phase 22. The filler phase 22 can be less than 60% of the tacky preceramic-polymer-based adhesive by weight. The resin phase 20 can be chosen such that the ceramic phase 18 includes at least one of silicon carbide, silicon oxycarbide, silicon nitride, boron carbide, boron nitride, silicon nitride carbide, silicon carbide nitride, aluminum nitride, aluminum oxynitride, and aluminum oxide after the converting step 108. For instance, the resin phase 20 can include at least one of polycarbosilane, polysilazane, and polycarbosiloxane. RD-730 preceramic resin (Starfire Systems, Inc., Schenectady, NY) is one exemplary resin phase 20.

The filler phase 22 can include a carbide, a nitride, an oxide, an oxynitride or an oxycarbide. In another example, the filler phase 22 can include a reactive species such as a metal, carbon, or another reactive precursor, which can react with excess carbon in the matrix material 16 or the resin phase 20.

The tacky preceramic-polymer-based adhesive can be prepared by combining the filler phase 22 with the resin phase 20. The combining can be accomplished by reducing the viscosity of the resin phase 20, for example, by heating the resin phase 20, sufficiently such that the filler phase 20 can be blended in. In another example, the filler phase 22 can be mixed into the resin phase 20 at room temperature by high-shear mixing. In a further example, the resin phase 20 can be dissolved or partially dissolved in a solvent prior to mixing in the filler phase 22. The solvent can then be removed by high heat and/or reduced pressure.

## Claims

1. A method of making a composite component (10), the method comprising:
applying (100) a preceramic-polymer-based adhesive on a first fiber array (12a);
arranging (102) a second fiber array (12b) on the first fiber array, the preceramic-polymer-based adhesive holding the first fiber array and the second fiber array together;
debulking (104) the first fiber array and the second fiber array to remove air within and between the first fiber array and the second fiber array;
infiltrating (106) the first fiber array and the second fiber array with a matrix material to form the component (10); and
converting (108) the preceramic-polymer-based adhesive into an integral ceramic phase (18) of the component (10) by pyrolysis.

2. The method of claim 1, wherein the preceramic-polymer-based adhesive includes a resin phase (20) and a filler phase (22).

3. The method of claim 2, wherein the preceramic-polymer-based adhesive includes 60% or less of the filler phase (22) by weight.

4. The method of claims 2 or 3, wherein the filler phase (22) includes at least one of a carbide, a nitride, an oxycarbide, an oxynitride, and an oxide.

5. The method of any of claim 2, wherein the filler phase (22) participates in a reaction with at least one of the resin phase (20) and the matrix material during the converting step (108), wherein the filler phase includes a reactive species which can react with excess carbon in the matrix material or the resin phase.

6. The method of any preceding claim, wherein the preceramic-polymer-based adhesive is applied to the first fiber array and the second fiber array at a first temperature then heated to a second, higher temperature.

7. The method of claims 1 to 5, wherein the preceramic-polymer-based adhesive is heated to a first temperature prior to the applying (100) on the first fiber array, then cooled to a second, lower temperature.

## Patentansprüche

1. Verfahren zum Herstellen einer Komponente (10) einer Zusammensetzung, wobei das Verfahren Folgendes umfasst:
Aufbringen (100) eines Haftmittels auf Basis eines präkeramischen Polymers auf ein erstes Faserarray (12a);
Anordnen (102) eines zweiten Faserarrays (12b) auf dem ersten Faserarray, wobei das Haftmittel auf Basis eines präkeramischen Polymers das erste Faserarray und das zweite Faserarray zusammenhält;
Entlüften (104) des ersten Faserarrays und des zweiten Faserarrays, um Luft innerhalb des ersten Faserarrays und des zweiten Faserarrays und zwischen diesen zu entfernen;
Infiltrieren (106) des ersten Faserarrays und des zweiten Faserarrays mit einem Matrixmaterial, um die Komponente (10) zu bilden; und
Umwandeln (108) des Haftmittels auf Basis eines präkeramischen Polymers durch Pyrolyse in eine integrale Keramikphase (18) der Komponente (10).

2. Verfahren nach Anspruch 1, wobei das Haftmittel auf Basis eines präkeramischen Polymers eine Harzphase (20) und eine Füllstoffphase (22) beinhaltet.

3. Verfahren nach Anspruch 2, wobei das Haftmittel auf Basis eines präkeramischen Polymers 60 Gew.-% oder weniger Füllstoffphase (22) beinhaltet.

4. Verfahren nach Anspruch 2 oder 3, wobei die Füllstoffphase (22) mindestens eines von einem Carbid, einem Nitrid, einem Oxycarbid, einem Oxynitrid und einem Oxid beinhaltet.

5. Verfahren nach Anspruch 2, wobei die Füllstoffphase (22) während des Umwandlungsschritts (108) an einer Reaktion mit mindestens einem von der Harzphase (20) und/oder dem Matrixmaterial teilnimmt, wobei die Füllstoffphase eine reaktive Spezies beinhaltet, die mit überschüssigem Kohlenstoff in dem Matrixmaterial oder der Harzphase reagieren kann.

6. Verfahren nach einem der vorhergehenden Ansprüche, wobei das Haftmittel auf Basis eines präkeramischen Polymers bei einer ersten Temperatur auf das erste Faserarray und das zweite Faserarray aufgebracht und dann auf eine zweite, höhere Temperatur erhitzt wird.

7. Verfahren nach den Ansprüchen 1 bis 5, wobei das Haftmittel auf Basis eines präkeramischen Polymers vor dem Aufbringen (100) auf die erste Faseranordnung auf eine erste Temperatur erhitzt und anschließend auf eine zweite, niedrigere Temperatur abgekühlt wird.

## Revendications

1. Procédé de fabrication d'un composant composite (10), le procédé comprenant :
l'application (100) d'un adhésif à base de polymère précéramique sur un premier réseau de fibres (12a) ;
l'agencement (102) d'un second réseau de fibres (12b) sur le premier réseau de fibres, l'adhésif à base de polymère précéramique maintenant ensemble le premier réseau de fibres et le second réseau de fibres ;
le débullage (104) du premier réseau de fibres et du second réseau de fibres pour éliminer l'air à l'intérieur et entre le premier réseau de fibres et le second réseau de fibres ;
l'infiltration (106) du premier réseau de fibres et du second réseau de fibres avec un matériau de matrice pour former le composant (10) ; et
la conversion (108) de l'adhésif à base de polymère précéramique en une phase céramique intégrale (18) du composant (10) par pyrolyse.

2. Procédé selon la revendication 1, dans lequel l'adhésif à base de polymère précéramique comporte une phase de résine (20) et une phase de remplissage (22).

3. Procédé selon la revendication 2, dans lequel l'adhésif à base de polymère précéramique comporte 60 % ou moins de la phase de remplissage (22) en poids.

4. Procédé selon les revendications 2 ou 3, dans lequel la phase de remplissage (22) comporte au moins un carbure, un nitrure, un oxycarbure, un oxynitrure, et un oxyde.

5. Procédé selon l'une quelconque de la revendication 2, dans lequel la phase de remplissage (22) participe à une réaction avec au moins l'une de la phase de résine (20) et du matériau de matrice pendant l'étape de conversion (108), dans lequel la phase de remplissage comporte une espèce réactive qui peut réagir avec l'excès de carbone dans le matériau de matrice ou la phase de résine.

6. Procédé selon une quelconque revendication précédente, dans lequel l'adhésif à base de polymère précéramique est appliqué sur le premier réseau de fibres et le second réseau de fibres à une première température puis chauffé à une seconde température plus élevée.

7. Procédé selon les revendications 1 à 5, dans lequel l'adhésif à base de polymère précéramique est chauffé à une première température avant l'application (100) sur le premier réseau de fibres, puis refroidi à une seconde température plus basse.
